# EUROPÄISCHE PATENTSCHRIFT

(11) **EP 0 576 041 B1**
(45) Veröffentlichungstag und Bekanntmachung des Hinweises auf die Patenterteilung: **14.02.1996**
(21) Anmeldenummer: 93113909.1
(22) Anmeldetag: 12.09.1991
(51) Int. Cl.: F24D 3/10, B29C 65/00, B23Q 16/00

(54) **Sanitär- und Heizungsrohrsystem, vollständig oder überwiegend bestehend aus Kunststoff**
Pipe system for sanitary and heating systems, entirely or predominantly made of plastic
Réseau d'alimentation pour installations sanitaires ou de chauffage, constitué complètement ou principalement de matière plastique

(30) Priorität: 10.05.1991 DE 9105824 U; 15.11.1990 DE 9015675 U; 10.05.1991 DE 9105823 U; 24.04.1991 DE 9105038 U; 26.04.1991 DE 9105171 U
(43) Veröffentlichungstag der Anmeldung: 29.12.1993
(62) Teilanmeldung aus: 91115490.4
(73) Patentinhaber: RAFELD KUNSTSTOFFTECHNIK GmbH & Co. KG, D-87640 Ebenhofen (DE)
(72) Erfinder: Rafeld, Karl, D-87640 Ebenhofen (DE)
(74) Vertreter: Kern, Wolfgang, Dipl.-Ing.

(56) Entgegenhaltungen:
- GB-A- 2 134 204

## Beschreibung

Die Erfindung betrifft ein Sanitär- und Heizungsrohrsystem, vollständig oder überwiegend bestehend aus Kunststoff, insbesondere Polypropylen, für die Wasserversorgung, mit einer Vorrichtung für ein Schweißgerät zum Verschweißen von parallelen Kunststoffrohren, mit der ein stirnseitiger Längenabgleich der Kunststoffrohre herstellbar ist.

Kunststoffrohre, insbesondere solche aus Polypropylen, werden aufgrund ihrer guten Materialeigenschaften weit verbreitet verwendet, beispielsweise als Industrierohre, Fußbodenheizungsrohre, Rohre für die Trinkwasser-Hausinstallation sowie für Abwasserleitungen und Chemikalienleitungen und müssen zu diesem Zweck mit Fittings, beispielsweise Reduktionen, Übergangsmuffen, Winkel und T-Stücken bei der Montage solcher Leitungs- bzw. Rohrsysteme verschweißt werden. Dabei ist in vielen Fällen erforderlich, daß solche Kunststoffrohre in Parallellage verlegt und im Hinblick auf ihre Enden maßgenau abgeglichen werden.

Zur schnellen Herbeiführung eines solchen Längenabgleichs und um zu erreichen, daß nach erfolgtem Abgleich dieser auch beibehalten wird, sich die parallelen Rohre also nicht wieder in bezug aufeinander verschieben können, während beispielsweise an ihnen mit einem Schweißgerät gearbeitet wird, wurde erfindungsgemäß eine Vorrichtung entwickelt, die sich durch einen auf die parallel angeordneten Kunststoffrohre aufsetzbaren Reiterkörper mit aufstellbarem Bügelkörper kennzeichnet, der in seiner aufgestellten Position quer zur Rohrlängsachse über die Rohrenden abwärts schwenkbar ist und eine Stirnplatte aufiveist, an der die Stirnseiten der Rohrenden zur Anlage kommen.

Um den Reiterkörper auf den Kunststoffrohren ortsfest zu installieren, hat es sich bewährt, ihn mit in Rohrlängsrichtung verlaufenden, etwa halbkreisförmigen Aussparungen zu versehen, deren Durchmesser an den Rohraußendurchmesser angepaßt ist und in denen die zu verschweißenden Rohre sitzen. Durch den formschlüssigen Eingriff der Rohre in diese Aussparungen wird auch der Rohrabstand festgelegt. Die Form des Reiterkörpers entspricht vorteilhafterweise der eines Quaders, dessen Unterseite und beide gegenüberliegende Seitenflächen die Aussparungen aufweisen und an dessen die beiden Seitenflächen begrenzenden, kleineren Stirnseiten mittels Gelenkzapfen der Bügelkörper angelenkt ist, der um etwa 90 verschwenkbar ist.

Der Bügelkörper hat zweckmäßigerweise die Form eines L-Profilstücks, dessen kurzer Schenkel die Stirnplatte bildet und dessen langer Schenkel eine mittlere Aussparung aufweist, die von zwei seitlichen Armen begrenzt ist, welche an den Gelenkzapfen gehaltert sind. Diese Halterung läßt sich zweckmäßigerweise so ausbilden, daß die seitlichen Arme in bezug auf die Stirnseiten des Reiterkörpers im heruntergeklappten Zustand des Bügelkörpers mit ihrer Oberseite in der Ebene der Oberseite des Reiterkörpers liegen.

Gemäß einer weiteren vorteilhaften Ausgestaltung der Erfindung ist die Oberseite des Reiterkörpers von einem Schraubelement senkrecht durchsetzt, das zwischen den beiden parallelen Rohren aus der Unterseite des Reiterkörpers austritt, wo es einen Quersteg trägt, der durch das Schraubelement gegen die Rohre preßbar ist und den Reiterkörper mit Hilfe einer Mutter auf den Rohren festklemmt. Dadurch ist sichergestellt, daß die Vorrichtung im auf die Rohre aufgesetzten Zustand arretiert werden kann, sich also von den Rohren nicht wieder abhebt, noch von ihnen herunterfällt.

Die Erfindung wird im folgenden an Hand des in der Zeichnung dargestellten Ausführungsbeispiels näher erläutert. In der Zeichnung zeigen:
Fig. 1 eine isometrische Darstellung der Vorrichtung mit hochgeklapptem Bügelkörper (dicker Strich) und heruntergeklapptem Bügelkörper (dünner Strich), jedoch ohne Schraubelement;
Fig. 2 eine Seitenansicht der Vorrichtung von Fig. 1 mit eingebautem Schraubelement.

Die in den Zeichnungsfiguren dargestellte Vorrichtung weist einen quaderförmigen Reiterkörper 3 und einen daran angelenkten Bügelkörper 4 auf und läßt sich auf zwei parallele Kunststoffrohre 1, 2 aufsetzen zu dem Zweck, die Rohre in einem gewünschten Abstand voneinander zu halten und die Rohrenden 5, 6 abzugleichen, d.h., sie in einer gemeinsamen Ebene anzuordnen, damit an den Rohren 1, 2 gewünschte Schweißmaßnahmen vorgenommen werden können, ohne daß sich die Rohre dabei in bezug aufeinander oder in bezug auf das Schweißgerät verschieben.

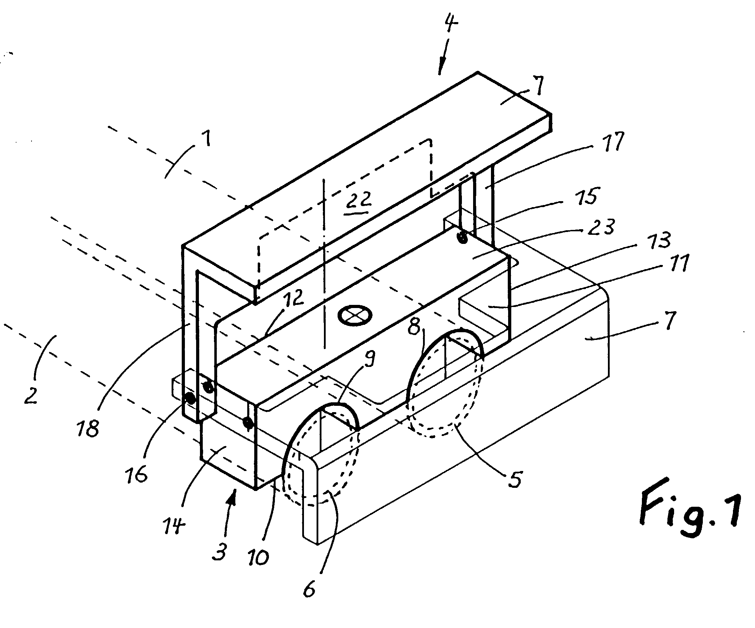

Die Unterseite 10 des Reiterkörpers 3 ist mit zwei in Rohrlängsrichtung verlaufenden Aussparungen 8, 9 versehen, die einen halbkreisförmigen Umriß haben, wie an den beiden gegenüberliegenden Seitenflächen 11, 12 ersichtlich. Der Durchmesser dieser halbkreisförmigen Aussparungen entspricht dem Außendurchmesser der Rohre 1, 2, so daß der Reiterkörper rittlings auf die Rohre aufgesetzt werden kann und diese dadurch in einem Abstand hält. An den Stirnseiten 13, 14 des Reiterkörpers 3 ist mittels Gelenkzapfen 15, 16 der Bügelkörper 4 angelenkt und um diese Gelenkzapfen um etwa 90 aus seiner in dicken Linien in Fig. 1 dargestellten aufrechten Lage in seine in dünnen Linien dargestellte waagrechte Lage verschwenkbar, in der seine Stirnplatte 7 an den Stirnseiten der Rohrenden 5, 6 zur Anlage kommt. Dadurch wird die Vorrichtung in bezug auf die Rohre 1, 2 auch in Längsrichtung festgelegt.

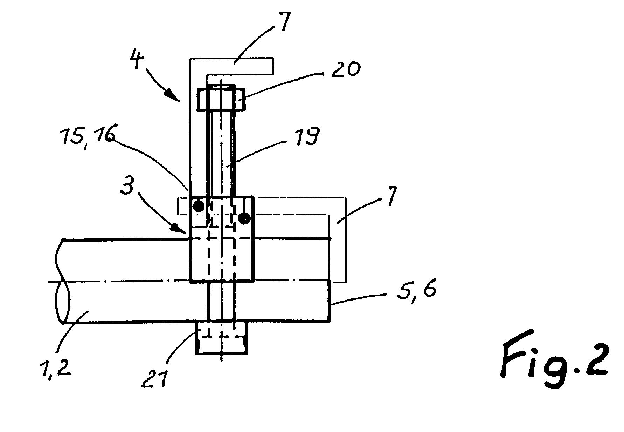

Um zu verhindern, daß sich die Vorrichtung von der Oberfläche der Rohre abhebt, ist ein Schraubelement 19 vorgesehen, das die Oberseite 23 des Reiterkörpers 3 senkrecht zwischen den beiden Rohren durchdringt und auf der Unterseite 10 des Reiterkörpers austritt, wie in Fig. 2 ersichtlich. Am unteren Ende des Schraubelementes 19 befindet sich ein Quersteg 21, der durch das Schraubelement gegen die Rohre 1, 2 gepreßt wird. Mit Hilfe einer Mutter 20 auf dem Schaft des Schraubelementes 19 läßt sich der Reiterkörper 3 auf diese Weise auf den Rohren festklemmen, so daß er sich nicht von ihnen von selbst abheben kann.

Der Bügelkörper 4, der die Form eines L-Profilstücks hat, dessen kurzer Schenkel die Stirnplatte 7 bildet, weist einen langen Schenkel mit einer mittleren Aussparung 22 auf, die von zwei seitlichen Armen 17, 18 begrenzt ist, welche den Bügelkörper durch die Gelenkzapfen 15, 16 an den Stirnseiten 13, 14 haltern. Diese Halterung ist so ausgebildet, daß der Bügelkörper im heruntergeklappten Zustand mit der Oberseite der Arme 17, 18 in der Ebene der Oberseite 23 des Reiterkörpers 3 liegt, wie aus Fig. 1 ersichtlich.

## Patentansprüche

1. Sanitär- und Heizungsrohrsystem, vollständig oder überwiegend bestehend aus Kunststoff, insbesondere Polypropylen, für die Wasserversorgung, mit einer Vorrichtung für ein Schweißgerät zum Verschweißen von parallelen Kunststoffrohren, mit der ein stirnseitiger Längenabgleich der Kunststoffrohre herstellbar ist, **gekennzeichnet** durch einen auf die parallel zueinander angeordneten Kunststoffrohre (1, 2) aufsetzbaren Reiterkörper (3) mit einem aufstellbaren Bügelkörper (4), der in seiner aufgestellten Position quer zur Rohrlängsachse über die Rohrenden (5, 6) abwärts schwenkbar ist und eine Stirnplatte (7) aufweist, an der die Stirnseiten der Rohrenden zur Anlage kommen.

2. System nach Anspruch 1, dadurch **gekennzeichnet**, daß der Reiterkörper (3) im Abstand der parallelen Rohre (1, 2) in Rohrlängsrichtung verlaufende, etwa halbkreisförmig ausgebildete Aussparungen (8, 9) aufweist, deren Durchmesser an den Rohraußendurchmesser angepaßt ist und in denen die zu verschweißenden Rohre sitzen.

3. System nach Anspruch 1 oder 2, dadurch **gekennzeichnet**, daß der Reiterkörper (3) ein Quader ist, dessen Unterseite (10) und beiden gegenüberliegenden Seitenflächen (11, 12) die Aussparungen (8, 9) aufweisen und an dessen die beiden Seitenflächen (11, 12) begrenzenden, kleineren Stirnseiten (13, 14) mittels Gelenkzapfen (15, 16) der Bügelkörper (4) angelenkt ist, der um etwa 90 verschwenkbar ist.

4. System nach einem der Ansprüche 1 bis 3, dadurch **gekennzeichnet**, daß der Bügelkörper (4) ein L-Profilstück ist, dessen kurzer Schenkel die Stirnplatte (7) bildet und dessen langer Schenkel eine mittlere Aussparung (22) aufweist, die von zwei seitlichen Armen (17, 18) begrenzt ist, welche an den Gelenkzapfen (15, 16) gehaltert sind.

5. System nach Anspruch 4, dadurch **gekennzeichnet**, daß die Halterung der seitlichen Arme (17, 18) in bezug auf die Stirnseiten (13, 14) des Reiterkörpers (3) so angeordnet ist, daß die Oberfläche des langen Schenkels des U-Profils des Bügelkörpers (4) im heruntergeklappten Zustand in der Ebene der Oberseite (23) des Reiterkörpers (3) liegt.

6. System nach einem der Ansprüche 1 bis 5, dadurch **gekennzeichnet**, daß die Oberseite (23) des Reiterkörpers (3) von einem Schraubelement (19) senkrecht durchsetzt ist, das zwischen den beiden parallelen Rohren (1, 2) aus der Unterseite (10) des Reiterkörpers (3) austritt, wo es einen Quersteg (21) trägt, der durch das Schraubelement gegen die Rohre (1, 2) preßbar ist und den Reiterkörper (3) mit Hilfe einer Mutter (20) auf den Rohren festklemmt.

## Claims

1. Plumbing and heating pipe system for water supply purposes, made substantially of plastic material, especially polypropylene, including an arrangement for a welding device for welding parallel plastic pipes, by means of which arrangement the ends of the plastic pipes can be equalised as to their length, characterized by a straddling body (3), adapted to be disposed on the parallel arranged plastic pipes (1, 2) and having an upwardly pivotable bracket member (4) which in its upwardly pivoted position can be pivoted downwards transversely to the longitudinal pipe axis across the pipe ends (5, 6) and is provided with an end plate (7) for abutment of the pipe ends thereat.

2. System according to claim 1, characterized in that the straddling body (3) is formed with approximately semi-circular recesses extending in longitudinal direction of the pipes (1, 2) at the spacing of the parallel pipes, said recesses having a diameter which is matched with the outer diameter of the pipes and having the pipes to be welded seated therein.

3. System according to claim 1 or 2, characterized in that the straddling body (3) is a parallelepiped the underside (10) and the two opposed side faces of which include said recesses (8, 9) and to the smaller end faces (13, 14), which limit the two side faces (11, 12), the bracket member (4) is pivotally mounted by means of pivots (15, 16) and is adapted to be pivoted by about 90°.

4. System according to claim 3, characterized in that the bracket member (4) is an L-section member the short leg of which forms the end plate (7) and the long leg of which is formed with a central recess (22) which is limited by two lateral arms (17, 18) supported by said pivots (15, 16).

5. System according to claim 4, characterized in that the support of the lateral arms (17, 18) relative to the end faces (13, 14) of the straddling body (3) is arranged such that the surface of the long leg of the U-section of the bracket member (4) in the downwardly pivoted state lies in the plane ofthe top (23) ofthe straddling body (3).

6. System according to claim 5, characterized in that a screw member (19) is passed penpendicularly through the top (23) of the straddling body (3) and exits between the two parallel pipes (1, 2) from the underside ofthe straddling body (3) where it carries a transverse piece (21) which is adapted to be urged by the screw member against the pipes (1, 2) to clamp the straddling body (3) to the pipes by means of a nut (20).

## Revendications

1. Système de canalisations pour l'alimentation en eau d'installations sanitaires ou de chauffage, constitué complètement ou principalement de matière plastique, en particulier de polypropylène, pourvu d'un dispositif pour un appareil de soudage pour le soudage de tubes en matière plastique parallèles, grâce auquel il est possible de réaliser un alignement longitudinal frontal des tubes en matière plastique, caractérisé par un cavalier (3) pouvant être posé sur les tubes en matière plastique disposés parallèlement les uns aux autres, pourvu d'un étrier pouvant être dressé (4) qui, dans sa position dressée, peut être rabattu transversalement à l'axe longitudinal des tubes sur les extrémités des tubes (5, 6) et présente une plaque frontale (7) sur laquelle prennent appui les faces frontales des extrémités de tubes.

2. Système selon la revendication 1, caractérisé en ce que le cavalier (3) présente des évidements (8, 9) sensiblement semi-circulaires s'étendant dans la direction de la longueur des tubes et présentant le même espacement que les tubes parallèles (1, 2), dont le diamètre correspond au diamètre extérieur des tubes et dans lesquels sont logés les tubes à souder.

3. Système selon la revendication 1 ou 2, caractérisé en ce que le cavalier (3) est un parallélépipède rectangle dont la face inférieure (10) et les deux faces latérales opposées (11, 12) présentent les évidements (8, 9) et sur les faces frontales plus petites (13, 14), délimitant les deux faces latérales (11, 12), duquel est articulé par des pivots (15, 16) l'étrier (4) qui peut être pivoté d'environ 90°.

4. Système selon l'une quelconque des revendications 1 à 3, caractérisé en ce que l'étrier (4) est une pièce à profil en L dont la branche courte forme la plaque frontale (7) et dont la branche longue présente un évidement médian (22) délimité par deux bras latéraux (17, 18) qui sont fixés aux pivots (15, 16).

5. Système selon la revendication 4, caractérisé en ce que la fixation des bras latéraux (17, 18) est disposée par rapport aux faces frontales (13, 14) du cavalier (3) de telle façon que la surface supérieure de la branche longue du profil en U de l'étrier (4) se trouve à l'état rabattu dans le plan de la face supérieure (23) du cavalier (3).

6. Système selon l'une quelconque des revendications 1 à 5, caractérisé en ce que la face supérieure (23) du cavalier (3) est traversée perpendiculairement par un organe de vissage (19) qui sort de la face inférieure (10) du cavalier (3) entre les deux tubes parallèles (1, 2) où il supporte une barrette transversale (21) qui peut être pressée contre les tubes (1, 2) par l'organe de vissage et qui bloque le cavalier (3) sur les tubes à l'aide d'un écrou (20).
